# EUROPÄISCHE PATENTSCHRIFT

(11) **EP 0 316 923 B1**
(45) Veröffentlichungstag und Bekanntmachung des Hinweises auf die Patenterteilung: **03.03.1993**
(21) Anmeldenummer: 88119156.3
(22) Anmeldetag: 17.11.1988
(51) Int. Cl.: A01F 12/40

(54) **Verteilereinrichtung für Häcksler**
Spreader device for straw chopper
Repartisseur pour ensileuse

(30) Priorität: 17.11.1987 DE 3739067
(43) Veröffentlichungstag der Anmeldung: 24.05.1989
(73) Patentinhaber: BISO GmbH Maschinenfabrik, D-32289 Rödinghausen (DE)
(72) Erfinder: Scharf, Alois, D-4520 Melle 8 - St. Annen (DE)
(74) Vertreter: Zinnecker, Armin, Dipl.-Ing.

(56) Entgegenhaltungen:
- DE-A- 2 805 208
- DE-C- 3 530 195

## Beschreibung

Die Erfindung betrifft eine Verteilereinrichtung für Häcksler, vorzugsweise Anbauhäcklser für Mähdrescher, mit einem oberen Deckblech, unterhalb von dem eine rechte und eine linke Gruppe von winkelig, vorzugsweise rechtwinkelig, zu diesem stehenden Leitblechen nebeneinander angeordnet sind, die an ihren dem Häcksler zugewandten Enden um Achsen schwenkbar gelagert und im Abstand von diesen Achsen mit Führungsbolzen, die Führungsschlitze des Deckblechs oder des Gehäuses durchsetzen, fest verbunden sind, und mit einer jeder der beiden Gruppen von Leitblechen zugeordneten Stelleiste, wobei die Führungsbolzen mit den Leitblechen durch fixierte Lager verbunden und die Leitbleche an ihren dem Häcksler zugewandten Enden in Langlöchern auf den Achsen gelagert sind, die Führungsschlitze jeder Gruppe in Querrichtung versetzt und im wesentlichen parallel zueinander und zu der durch die Achsen gezogenen Linie verlaufen, die Stelleisten jeder Gruppe derart nach außen geneigt zu dieser Linie angeordnet sind, daß der Abstand der Führungsbolzen zu den Achsen entsprechend dem Versatz der Führungsschlitze nach außen hin von Leitblech zu Leitblech geringer wird, mit jeder Stelleiste ein Stellhebel gelenkig verbunden ist, der im Abstand von seinem Anlenkpunkt auf der Stelleiste an dem Deckblech angelenkt ist und eine Koppelstange die Stellhebel miteinander verbindet.

Eine derartige Verteilereinrichtung ist aus der DE-PS 35 30 195 bekannt. Die vorbekannte Verteilereinrichtung ist konstruktiv einfach aufgebaut und ermöglicht es, den Winkel zwischen benachbarten Leitblechen bei einem Verschwenken von außen nach innen zu verkleinern bzw. negativ werden zu lassen, wenn die Leitbleche auf ihrem Schwenkweg nach innen von ihrer spitzwinkelig auseinanderlaufenden Stellung über ihre parallele Lage in eine spitzwinkelig aufeinander zu verlaufende Stellung verschwenkt werden. Es ist auch möglich, ausgehend von einer ausgeschwenkten parallelen Stellung der Leitbleche diese bei einem Verschwenken nach innen zunehmend konvergierend aufeinander zulaufen zu lassen. Die vorbekannte Stelleinrichtung ermöglicht es, die Verteilereinrichtung von einem Breitstreuen des gehäckselten Strohs auf dessen Ablage in einem Schward (Langablage) umzustellen und umgekehrt.

Bei der vorbekannten Verteilereinrichtung erfolgt eine Verstellung der Leitbleche durch eine Stelleiste, auf der die Führungsbolzen der Leitbleche schwenkbar gelagert sind, wobei unterschiedliche Schwenkwinkel der Leitbleche bei dem gleichen Verschiebeweg der Stelleiste dadurch erreicht werden, daß sich die Schwenkradien der Leitbleche nach außen hin verringern. Da die Führungsbolzen der Leitbleche in geradlinigen, zueinander parallelen Führungsschlitzen des Deckblechs verschoben werden, ermöglichen die Langlöcher die erforderliche Längsverschiebung der Leitbleche bei ihrem Verschwenken.

Die Betätigung der Verteilereinrichtung erfolgt durch eine Verschwenkung der mit jeder Stelleiste gelenkig verbundenen Stellhebel. Beide Stellhebel sind durch eine Koppelstange miteinander verbunden. Eine Bewegung dieser Koppelstange bewirkt also eine gleichsinnige Verschwenkung der beiden Gruppen von Leitblechen.

Mit der vorbekannten Verteilereinrichtung kann durch eine entsprechende Betätigung der Koppelstange den Seitenwindverhältnissen oder Hanglagen Rechnung getragen werden. Die Koppelstange wird derart betätigt, daß die Leitbleche in die dem Wind Zugewandte Richtung bzw. hangaufwärts weisen.

In der Praxis hat sich gezeigt, daß in besonderen Fällen eine flexiblere Einstellung auf besondere Seitenwindverhältnisse oder Hanglagen wünschenswert sein kann. Insbesondere kann es wünschenswert sein, die eine Gruppe von Leitblechen weniger stark zu verschwenken als die andere Gruppe von Leitblechen. Dies ist bei der vorbekannten Verteilereinrichtung nur durch getrennte Antriebe möglich. Beispielsweise kann es bei der vorbekannten Verteilereinrichtung vorgesehen sein, beide Gruppen von Leitblechen unabhängig voneinander durch jeweils einen gesonderten Antrieb zu betätigen. Dies ist jedoch aufwendig, weil zwei Antriebe vorgesehen werden müssen.

Hiervon ausgehend liegt der Erfindung die Aufgabe zugrunde, eine Verteilereinrichtung der oben genannten Art zu schaffen, bei der die beiden Gruppen von Leitblechen auf einfache Weise in verschieden großem Ausmaß verstellt werden können.

Erfindungsgemäß wird diese Aufgabe durch die im kennzeichnenden Teil des Anspruchs 1 angegebenen Merkmale gelöst. Mit den Stellhebeln sind Kraftübertragungsstücke gelenkig verbunden, die auf der Koppelstange verschieblich geführt sind, wobei die Verschiebung der Kraftübertragungsstücke gegenüber der Koppelstange durch äußere und innere Anschläge begrenzt ist. Die Verbindungsstelle von den Stellhebeln mit der Koppelstange kann sich also zwischen einem äußeren Anschlag und einem inneren Anschlag verschieben. Wenn die Koppelstange beispielsweise nach links bewegt wird, wird der zur rechten Gruppe von Leitblechen gehörende Stellhebel von dem äußeren Anschlag mitgenommen, während der zur linken Gruppe von Leitblechen gehörende Stellhebel von dem zugehörigen inneren Anschlag mitgenommen wird. Bei einer Bewegung der Koppelstange nach rechts ergeben sich die umgekehrten Verhältnisse. Im Ergebnis wird, insbesondere bei großer Streubreite, die nach außen bewegte Gruppe von Leitblechen in weniger großem Ausmaß nach außen verstellt als die nach innen bewegte Gruppe von Leitblechen. Mit der erfindungsgemäßen Verteilereinrichtung ist es also möglich, die beiden Gruppen von Leitblechen auf einfache Weise in verschieden großem Ausmaß zu verstellen. Dies kann deshalb auf einfache Weise erfolgen, weil lediglich ein Antrieb für die Koppelstange erforderlich ist, nicht jedoch zwei unabhängig voneinander betätigbare Antriebe für beide Stellhebel und damit beide Gruppen von Leitblechen.

Wenn die äußeren Anschläge und/oder die inneren Anschläge verstellbar sind, kann die Verteilereinrichtung noch besser an verschiedene Anforderungen angepaßt werden.

In einfacher Weise können die inneren Anschläge durch die Enden von den die Koppelstange umgebenden Rohren gebildet werden.

Zwischen den Verbindungsstellen von den Stellhebeln mit der Koppelstange und inneren Anschlägen an der koppelstange können Druckfedern vorgesehen sein, die die Bewegung dieser Verbindungsstellen vergleichmäßigen.

Nach einer vorteilhaften Weiterbildung werden die inneren Anschläge durch auf Block gehende Druckfedern gebildet. Die Druckfedern dienen also sowohl zur Vergleichmäßigung der Bewegung als auch als innere Anschläge.

Nach einer weiteren vorteilhaften Weiterbildung besteht die Koppelstange aus zwei Kolben-Zylinder-Einheiten, vorzugsweise Gasfedern. Auch diese Ausgestaltung führt zu einer Vergleichmäßigung der Bewegung. Die inneren Anschläge werden von den Kolben-Zylinder-Einheiten gebildet.

Die Länge der Koppelstange kann verstellbar sein, um eine weitere vorteilhafte Anpassungsmöglichkeit zu schaffen.

Zweckmäßigerweise sind die Lager der Führungsbolzen auf den Stelleisten in Langlöchern verschieblich geführt und in diesen fixierbar. Auf diese Weise können sich gewünschte Winkelstellungen der Leitbleche einstellen lassen.

Zweckmäßigerweise sind die Langlöcher auf den Stelleisten in Querrichtung versetzt zueinander angeordnet und verlaufen im wesentlichen parallel zu der durch die Achsen, um die die Leitbleche schwenkbar sind, gezogenen Linie.

Zur Fixierung der Stelleiste in der gewünschten Stellung der Leitbleche kann ein Führungsbolzen durch eine vorzugsweise mit einem Handhebel versehene Mutter in dem Langloch der Deckplatte festziehbar sein.

An den Kraftübertragungsstücken kann jeweils eine die Koppelstange übergreifende Schutzhülse befestigt sein. Diese Schutzhülse übergreift ggf. auf der Koppelstange angeordnete Federn.

Vorzugsweise ist an den Anschlägen jeweils eine die Schutzhülse teleskopartig untergreifende, weitere Schutzhülse befestigt. Die Abmessungen sind dabei derart aufeinander abgestimmt, daß die Feder stets von den beiden Schutzhülsen abgedeckt wird.

Vorteilhaft ist es, wenn eine vorzugsweise flexible Platte über die Breite der Verteilereinrichtung an dieser befestigt ist. Hierdurch werden die unter der Platte befindlichen Teile geschützt.

In weiterer Ausgestaltung der Erfindung ist vorgesehen, daß jedes der beiden seitlichen Begrenzungsbleche der haubenartigen Deckplatte auslaufseitig mit einer Leitklappe gelenkig verbunden ist, die durch eine zweiteilige Koppelstange gelenkig mit der Stelleiste oder dem Stellhebel verbunden ist, wobei die beiden Teile der Koppelstange derart begrenzt teleskopartig zueinander verschieblich und durch eine Feder in ihrer ausgefahrenen Stellung beaufschlagt sind, daß die Leitklappe bei einer Verstellung des Stellhebels nach außen hin in ihre nach außen geschwenkte Stellung gedrückt und bei einer Verstellung nach innen auf dem letzten Teil des Schwenkweges des Stellhebels bis nach vollständiger Streckung der Koppelstange nach innen hin mitgenommen wird. Auf diese Weise passen sich die seitlichen Leitklappen der jeweiligen Stellung der Leitbleche an.

Ein Ausführungsbeispiel der Erfindung wird nachstehend anhand der Zeichnung näher erläutert. In dieser zeigt
- Figur 1: den hinteren Teil eines Mähdreschers mit einem Anbauhäcksler, der mit einer Verteilereinrichtung für das gehäckselte Stroh versehen ist, in schematischer Darstellung,
- Figur 2: eine Draufsicht auf die Verteilereinrichtung mit geschwenkten Leitblechen und in Mittelstellung befindlicher Koppelstange,
- Figur 3: die in Fig. 2 gezeigte Verteilereinrichtung mit voll nach links verschobener Koppelstange,
- Figur 4: eine Draufsicht auf die Verteilereinrichtung mit etwa in ihre Mittelstellung geschwenkten Leitblechen bei Häckselbetrieb auf ebenem Feld bei Windstille,
- Figur 5: die in Figur 4 gezeigte Verteilereinrichtung in einer nach links geschwenkten Stellung bei Betrieb am Hang auf der linken Seite oder Windeinwirkung von links,
- Figur 6: eine der Figur 5 entsprechende Darstellung bei Betrieb am Hang auf der rechten Seite oder Windeinwirkung von rechts,
- Figur 7: eine Verteilereinrichtung mit zwei zwischen den Stellhebeln angreifenden, doppelt wirkenden Hydraulik-Zylindern,
- Figur 8: eine der Figur 7 entsprechende Darstellung, bei der die Hydraulik-Zylinder unmittelbar an den Stelleisten angreifen,
- Figur 9: eine Verteilereinrichtung mit einer durch einen doppelt wirkenden Arbeitszylinder mit durchgehender Kolbenstange angetriebenen Koppelstange,
- Figur 10: eine Koppelstange mit zwei Gasdruckfedern,
- Figur 11: eine Koppelstange mit zwei Spiralfedern und zwei Rohren,
- Figur 12: eine Koppelstange mit zwei Spiralfedern und mit 2 zum Teil die Koppelstange umgebenden Rohren,
- Figur 13: einen Antrieb für die Koppelstange mit Schaltern für verschiedene Stellungen der Koppelstange,
- Figur 14: ein Anzeigegerät für verschiedene Stellungen der Koppelstange,
- Figur 15: einen Teilschnitt durch die Verteilereinrichtung im Bereich einer Stelleiste,
- Figur 16: eine Draufsicht auf den geschnittenen Bereich nach Figur 15,
- Figur 17: einen Schnitt durch die Verteilereinrichtung längs der Linie A-B in Figur 15,
- Figur 18: eine Seitenansicht eines Teiles der der Verstellung der Leitklappe dienenden Kopp lstange,
- Figur 19: ein Kraftübertragungsstück mit einer Schutzhülse in einer vergrößerten Darstellung,
- Figur 20: eine der Figur 19 entsprechende Darstellung mit zwei teleskopartig ineinandergreifenden Schutzhülsen und
- Figur 21: eine Seitenansicht mit einer flexiblen Platte zur Abdeckung der Verteilereinrichtung.

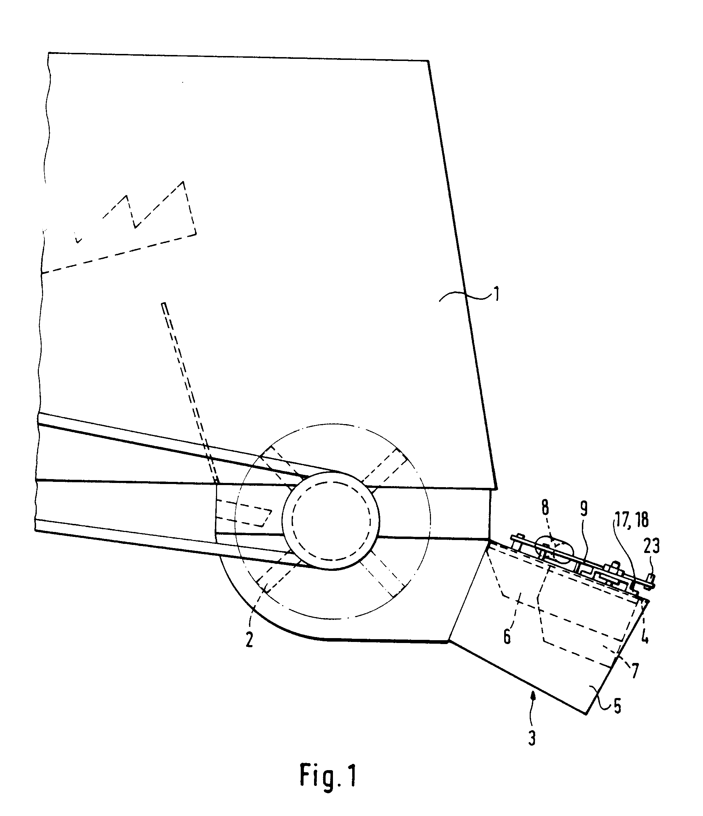

Figur 1 zeigt einen in üblicher Weise an einen Mähdrescher 1 angebauten Anbauhäcksler 2, der auslaufseitig mit einer Verteilereinrichtung 3 für das gehäckselte Stroh versehen ist. Die Verteilereinrichtung 3 besteht aus einer Deckplatte 4, die haubenartig mit seitlich abgewinkelten Schenkeln 5 versehen ist. Unter der Deckplatte 4 sind schwenkbare Leitbleche 6 und schwenkbare seitliche Leitklappen 7 vorgesehen.

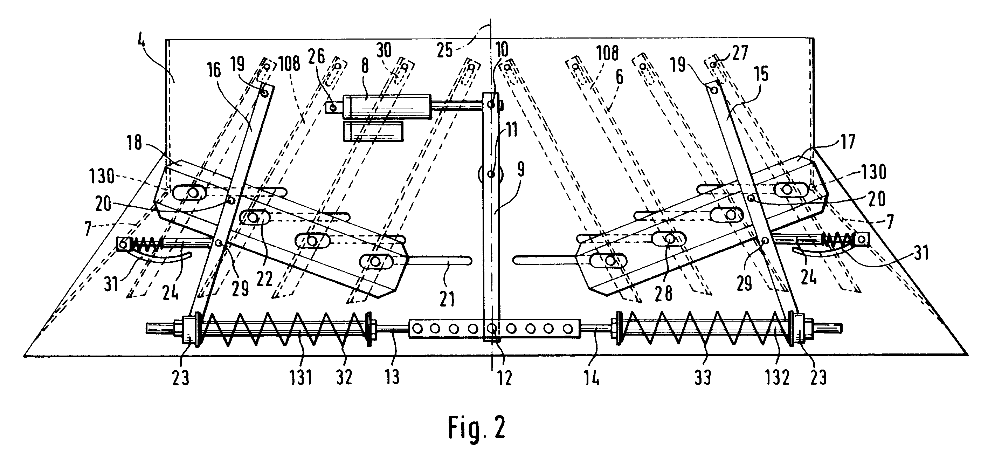

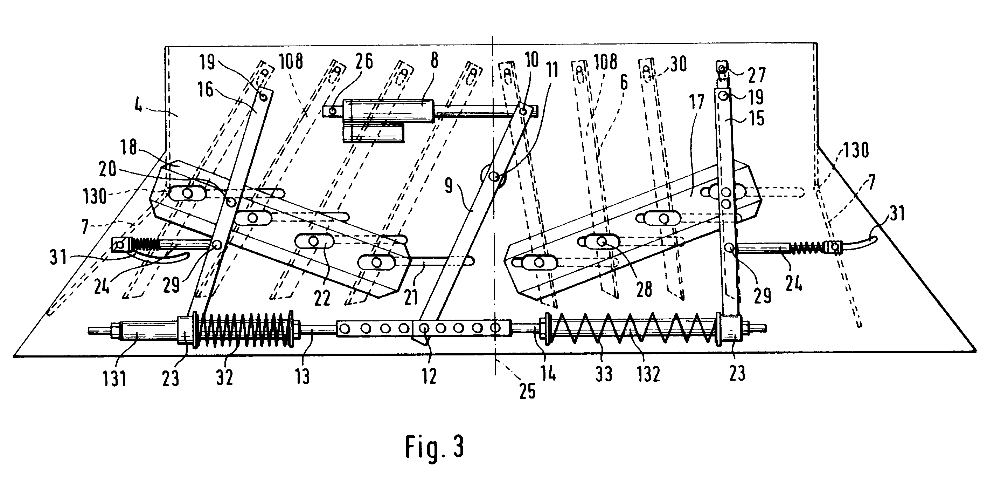

Wie aus den Figuren 2 und 3 ersichtlich sind die Leitbleche 6 winkelig, vorzugsweise rechtwinkelig zum Deckblech 4 angeordnet und können zusätzlich auch unterschiedliche Krümmungen um Querachsen aufweisen. Zu ihrer Halterung sind die Leitbleche 6 mit abgewinkelten Schenkeln 108 versehen. An ihren dem Häcksler 2 zugewandten Enden weisen die Schenkel 108 der Leitbleche 6 Langlöcher 30 auf, mit denen sie auf Achsen 27, die an dem Deckblech 4 befestigt sind, schwenkbar gelagert sind. Die Schenkel 108 weisen im Abstand von den Langlöchern 30 auf ihren Rückseiten Führungsbolzen 28 auf, die Führungsschlitze 21 des Deckblechs 4 durchsetzen. Die Führungsschlitze 21 sind in der aus den Figuren 2 und 3 ersichtlichen Weise gestaffelt und parallel zueinander in der Weise angeordnet, daß sie etwa parallel zu der durch die Achsen 27 verlaufenden Linie verlaufen und in Querrichtung rechts und links etwa gleiche Abstände zueinander aufweisen. Durch diese gestaffelte Anordnung der Führungsschlitze 21 wird erreicht, daß deren radialer Abstand zu den zugehörigen Achsen 27 von innen nach außen hin geringer wird.

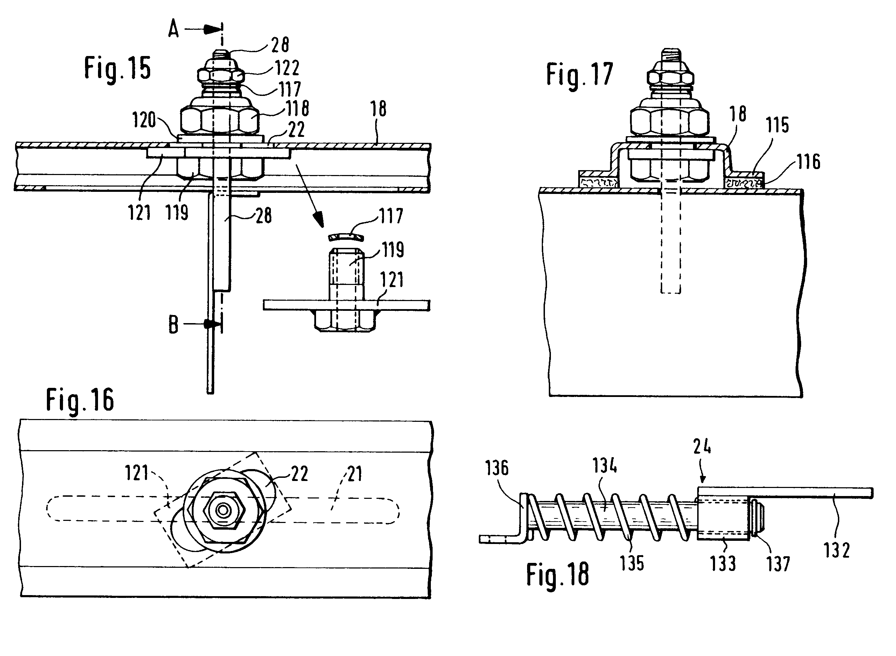

Die freien Enden der Führungsbolzen 28 durchsetzen zusätzlich Langlöcher 22 von Stelleisten 17, 18. Die Stelleisten 17, 18 weisen, wie am besten aus Figur 17 ersichtlich ist, im wesentlichen einen U-förmigen Querschnitt auf, wobei die Schenkel zusätzlich nach außen abgewinkelt sind, um flanschförmige Auflageflächen 115 zu bilden. Um eine Riefenbildung auf dem Deckblech zu verhindern, sind die Auflageflächen 115 mit Streifen 116 aus Filz oder dergleichen versehen. Die Führungsbolzen 28 sind, wie am besten aus Figur 15 ersichtlich, in Buchsen 119 schwenkbar gelagert, die über Muttern 118 und Unterlegscheiben 120 und Unterlegstücke 121 in den Langlöchern 22 der Stelleisten 17, 18 verschraubt sind. Die Führungsbolzen 28 überragen mit ihren äußeren mit Gewinden versehenen Teilen die Buchse 119 und sind in dieser durch aufgeschraubte Muttern 122 gehalten. Über die Muttern 122 lassen sich die Führungsbolzen auch festziehen. Zweckmäßigerweise ist daher mindestens eine Mutter 122 mit einem Handhebel versehen, um nach jeder Verstellung die eingestellte Stellung fixieren zu können.

Mit jeder Stelleiste 17, 18 ist ein zweiarmiger Stellhebel 15, 16 in seinem mittleren Bereich durch die Schwenkachse 20 schwenkbar verbunden. Die häckslerseitigen Arme der Schwenkhebel 15, 16 sind um die Achsen 19 schwenkbar mit dem Deckblech 4 verbunden.

Die nach außen weisenden Arme der Stellhebel 15, 16 sind mit den Kraftübertragungsstücken 23 bzw. 123 gelenkig verbunden. Die Koppelstangen 13, 14 bestehen aus einer linken Zug- und Druckstange 13 und aus einer rechten Zug- und Druckstange 14. Beide Zug- und Druckstangen weisen in ihrem inneren Bereich eine Lochreihe auf. Sie werden durch den Bolzen 12 miteinander verbunden. Durch die beiden Lochreihen kann die Gesamtlänge der Koppelstange 13, 14 verändert werden. Der Bolzen 12 ist mit dem hinteren Ende des Schwenkhebels 9 verbunden, der um den Drehpunkt 11 schwenkbar gelagert ist. Das vordere Ende des Schwenkhebels 9 zur Kraftübertragung trägt einen Bolzen 10, der mit der Stange eines Spindelmotors 8 bzw. mit der Kolbenstange eines Hydraulik- Zylinders 8 gelenkig verbunden ist. Die Spindel 8 bzw. der Hydraulik-Zylinder 8 ist um den Schwenkpunkt 26 drehbar gelagert.

Auf der Koppelstange 13, 14 befinden sich eine linke Druckfeder 32 und eine rechte Druckfeder 33. Die linke Druckfeder 32 stützt sich außen an dem linken Kraftübertragungsstück 23 ab, während sie sich innen an einem weiteren Anschlag abstützt. Die rechte Druckfeder 33 stützt sich außen an dem rechten Kraftübertragungsstück 23 und innen an einem weiteren Anschlag ab.

In dem Auslaufbereich der seitlichen Schenkel 5 des haubenartigen Abdeckblechs 4 sind um vertikale Achsen 130 Leitklappen 7 schwenkbar gelagert. Diese sind über Betätigungsstangen 24 gelenkig mit den Stellhebeln 15, 16 verbunden. Jede Betätigungsstange 24 ist in der aus Figur 18 ersichtlichen Weise zweiteilig aufgebaut und weist einen ersten gelenkig mit dem zweiteiligen Betätigungshebel 24 verbundenen Teil 132 auf, der eine Buchse 133 zeigt, in der der zweite stangenförmige Teil 134 der Betätigungsstange 24 axialverschieblich geführt ist. Auf der Stange 134 ist eine Druckfeder 135 aufgeschoben, die sich einerseits auf der Buchse 133 und andererseits auf dem Lagerstück 136 abstützt. Gegen ein Herausfallen aus der Buchse ist die Stange 134 durch einen Sicherungsring 137 gesichert.

Da das stangenförmige Teil 134 in der Buchse 133 des ersten Teils 132 teleskopartig geführt ist und die Druckfeder 135 bestrebt ist, die zweiteilige Betätigungsstang 24 in ihrem gestreckten Zustand zu halten, nimmt der in Figur 3 nach innen geschwenkte Stellhebel 15 die Leitklappe 7 auf dem letzten Teil ihres Schwenkweges nach innen hin mit, während der nach außen geschwenkte Stellhebel 16 die Leitklappe 7 in ihrer nach außen geschwenkten Stellung hält.

Der mit dem Gelenk versehene Stellbolzen der Leitklappe 7 ist in einem kreiskörmig gekrümmten Langloch 31 der Deckplatte 4 geführt.

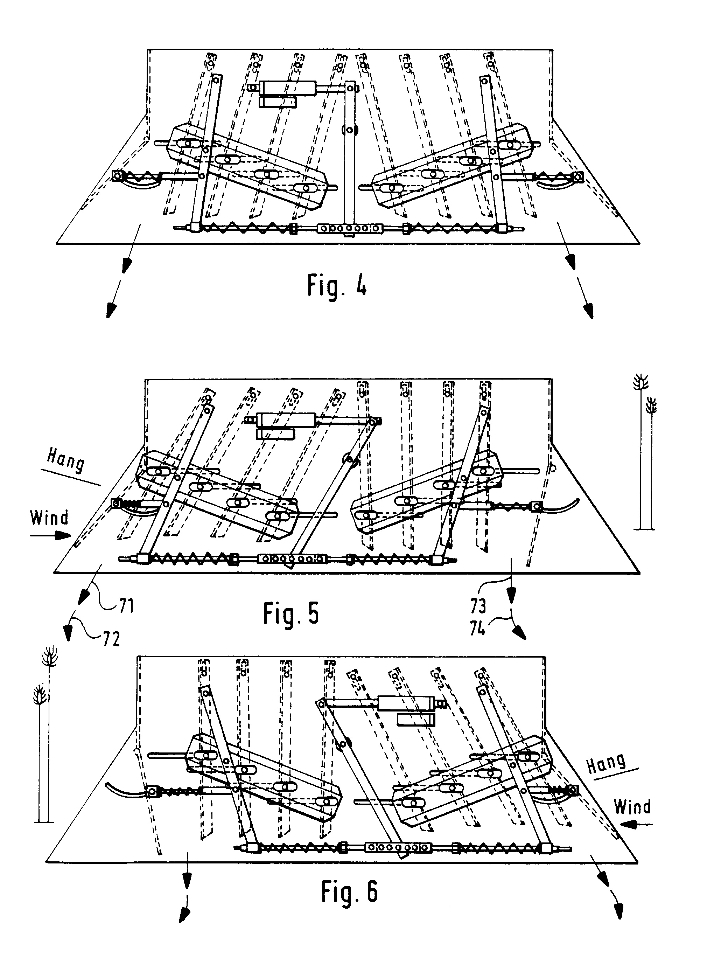

Die Figuren 2 und 4 zeigen die Verteilereinrichtung in ihrer Mittelstellung, also in der zur Mittellinie 25 symmetrischen Stellung. Diese Stellung wird gewählt, wenn auf ebenen Feld bei Windstille gehäckselt wird.

Figur 5 zeigt den Betrieb bei Häckseln am Hang auf der linken Seite oder Windeinwirkung von links. Auf der linken Seite verläßt das Häckselgut die Verteilereinrichtung in Richung des Pfeils 71, also mit einer Komponente in Querrichtung nach außen. Durch die Windeinwirkung wird anschließend eine Bewegungsrichtung in Richtung des Pfeils 72 erzeugt. Auf der rechten Seite verläßt das Häckselgut die Verteilereinrichtung in Richtung des Pfeils 73, also ohne Komponente in Querrichtung. Durch die Windeinwirkung oder durch die Einwirkung der Hanglage wird die Richtung gemäß Pfeil 74 erzeugt. Das gehäckselte Stroh (Häckselgut) wird also geringfügig nach außen bewegt.

Die Figur 6 zeigt in einer der Figur 5 entsprechenden Darstellung den Betrieb bei Häckseln am Hang auf der rechten Seite oder Windeinwirkung von rechts.

Bei der in den Figuren 2 und 3 dargestellten Verstellmöglichkeit für die Koppelstange 13, 14 erfolgt die Verstellung durch den Spindelmotor 8 bzw. den Hydraulik-Zylinder 8. Bei einer Betätigung des Spind-lmotors 8 nach rechts wird der Schwenkhebel 9 zur Kraftübertragung um den Drehpunkt 11 im Uhrzeigersinn verschwenkt. Hierzu muß der Spindelmotor 8 um den Schwenkpunkt 26 verschwenkbar sein. Das hintere Ende des Schwenkhebels 9 mit dem Bolzen 12 wird dementsprechend nach links bewegt, wodurch sich die Koppelstange 13, 14 ebenfalls nach links verschiebt.

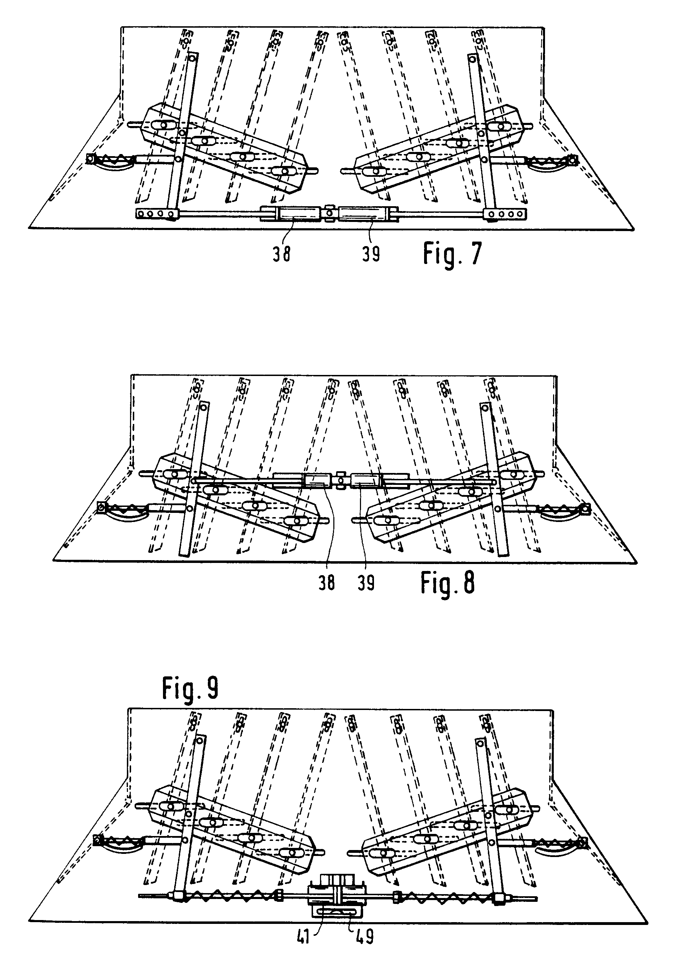

In Figur 7 ist eine andere Antriebsmöglichkeit für die Koppelstange dargestellt, die aus zwei doppelt wirkenden Zylindern 38, 39 besteht. An den Enden der Koppelstange sind Lochreihen vorgesehen, um die wirksame Länge der Koppelstange verändern zu können.

Die Figur 8 zeigt eine Verteilereinrichtung, bei der die doppelt wirkenden Zylinder 38, 39 die Koppelstangen antreiben. In diesem Fall greifen die Kolbenstangen der Hydraulik-Zylinder 38, 39 unmittelbar an den Stelleisten 17, 18 an.

In der Darstellung gemäß Figur 9 besteht der Antrieb für die Koppelstange aus einem doppelt wirkenden Arbeitszylinder 41 mit durchgehender Kolbenstange. Mit dem Arbeitszylinder 41 ist ein Bauteil verbunden, das ein Langloch 49 aufweist. Durch dieses Langloch 49 kann der Arbeitszylinder 41 relativ zu den Koppelstangen verstellt und festgestellt werden, um hierdurch den "Nullpunkt" des Arbeitszylinders 41 verändern zu können.

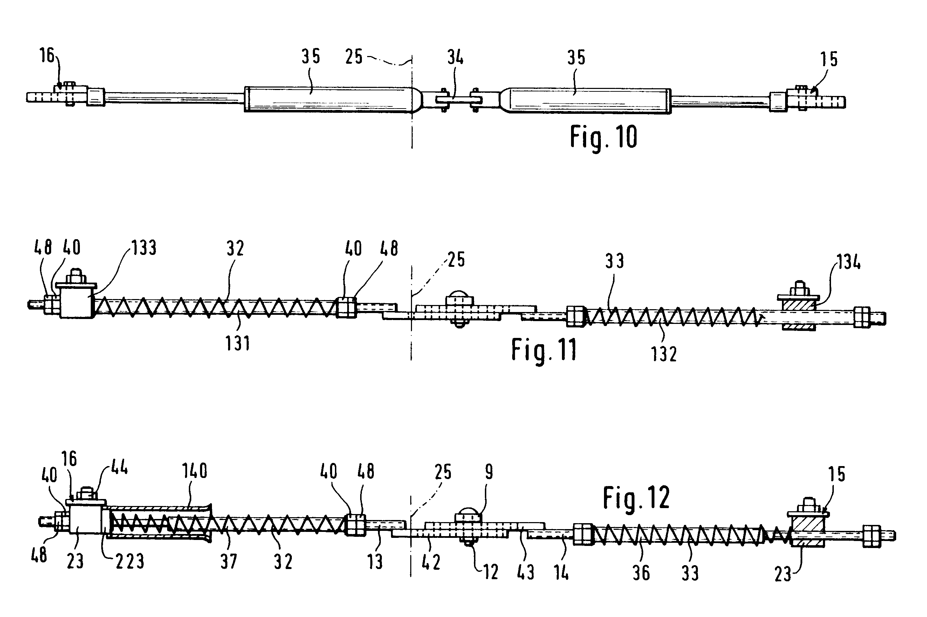

Figur 10 zeigt eine Koppelstange mit zwei Gasfedern 35, die durch ein Verbindungsstück 34 miteinander verbunden sind.

In Figur 11 sind anstelle der Gasdruckfedern Spiralfedern 32, 33 vorgesehen, die jeweils auf einem Rohr 131 und 132 gleiten und von den auf den Rohren gleitenden Druckstücken 133 und 134 zusammengedrückt werden können. Die Bewegung eines Druckstücks nach innen wird durch das jeweilige Blockieren einer der Federn begrenzt.

Figure 12 zeigt eine Koppelstange mit einer linken Druckfeder (Spiralfeder) 32 und einer rechten Druckfeder (Spiralfeder) 33. Die Krafteinleitung von dem Schwenkhebel 9 zur Kraftübertragung erfolgt über den Bolzen 12. In der Umgebung des Bolzens 12 sind die Lochreihen in den Anschlußstücken 42 und 43 dargestellt. Diese Anschlußstücke 42, 43 sind mit der Koppelstange 13, 14 fest verbunden. Im inneren und äußeren Bereich der Koppelstange 13, 14 befinden sich Kontermuttern 48, welche die Anschläge bildende Muttern 40 festlegen. Die Anschläge, die durch die Muttern 40 gebildet werden, sind also verstellbar. Die Federn 32 und 33 befinden sich zwischen den Anschlägen 40 und den Kraftübertragungsstücken 23. Die Kraftübertragungsstücke 23 sind auf der Koppelstange 13, 14 verschieblich geführt. Die Federn 32, 33 sind bestrebt, die Kraftübertragungsstücke nach außen an die äußeren Anschläge 40 zu drücken. Auch die äußeren Anschläge 40 werden von Muttern gebildet, die durch Kontermuttern 48 festgelegt werden können. Demnach sind auch die äußeren Anschläge 40 verstellbar. Die Koppelstange 13, 14 wird auf beiden Seiten von Rohren 36, 37 umgeben, die an ihren inneren Enden an den inneren Anschlägen 40 anliegen oder verschweißt sind und deren äußere Enden Anschläge für die Kraftübertragungsstücke 23 bilden. Der Verschiebeweg der Kraftübertragungsstücke 23 wird also nach außen durch die äußeren Anschläge 40 und nach innen durch die äußeren Enden der Rohre 36, 37 begrenzt. Die Bolzen 44 dienen zur beweglichen Verbindung mit den Stellhebeln 15, 16.

Die Wirkungsweise der in Figur 12 dargestellten Koppelstange 13, 14 wird am besten im Zusammenhang mit den Figuren 2 bis 6 ersichtlich. Die Darstellung in der Figur 11 entspricht dabei der Darstellung in den Figuren 2 bis 6. Bei einer Verschiebung der Koppelstange 13, 14 nach rechts wird das linke Kraftübertragungsstück 23 und damit das hintere Ende des Stellhebels 16 von dem äußeren Anschlag 40 mitgenommen. Die linke Feder 32 bleibt im nicht-zusammengedrückten Zustand. Das rechte Kraftübertragungsstück 23 bleibt stehen oder es bewegt sich soweit nach rechts wie es die Langlöcher 21 durch die Voreinstellung zulassen. Dabei wird die rechte Feder 33 zusammengedrückt. In der Darstellung gemäß Figur 12 hat das rechte Kraftübertragungsstück 23 den durch das rechte, äußere Ende des Rohrs 36 gebildeten Anschlag noch nicht ganz ereicht.

Wie aus der Figur 3 ersichtlich, wird der rechte Stellhebel 15 in einem größeren Ausmaß verschwenkt als der linke Stellhebel 16. Dies wird durch das Zusammenspiel des begrenzten Verschiebewegs der Kraftübertragungsstücke 23 und der Federn 32, 33 bewirkt.

Es ist auch möglich, bei der in Figur 12 dargestellten Koppelstange 13, 14 die Federn 32, 33 wegzulassen. In diesem Fall ist die Bewegung der Kraftübertragungsstücke 23 und damit der Stellhebel 15, 16 jedoch labil und nicht zwangsläufig.

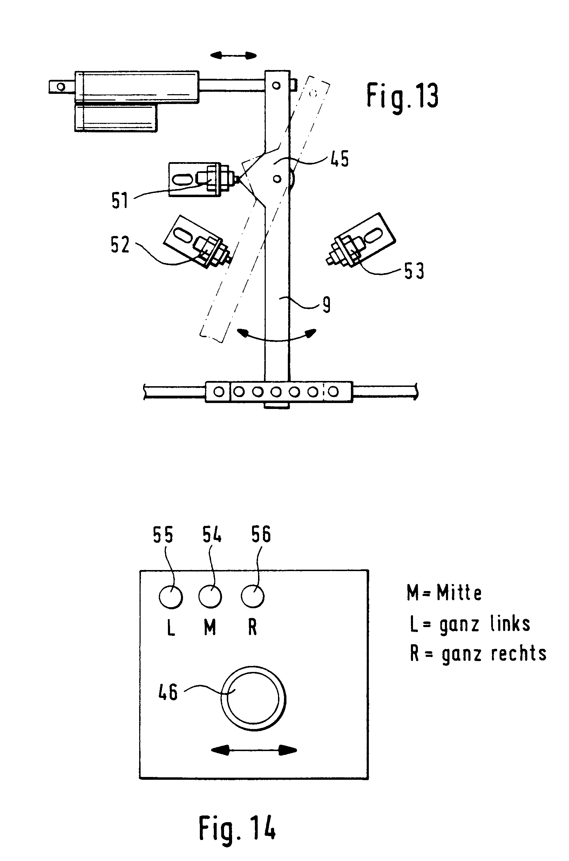

Die Figur 13 zeigt Schalter 51, 52, 53, die verschiedene Stellungen des die Koppelstange antreibenden Schwenkhebels 9 anzeigen. Der Schalter 52 wird betätigt, wenn der Schwenkhebel 9 eine der linken Endstellung der Koppelstange entsprechende Stellung erreicht hat. Dementsprechende zeigt der Schalter 53 die rechte Endstellung der Koppelstange an. Durch den Schalter 51 kann die Mittelstellung der Koppelstange angezeigt werden. Zu diesem Zweck ist an den Schwenkhebel 9 ein Schaltnocken 45 angebracht, dessen Spitze in der Mittelstellung des Schwenkhebels 9 auf der die Schwenkachse 11 des Schwenkhebels 9 mit dem Schalter 51 verbindenden Linie liegt.

Die Figur 14 zeigt ein Anzeigegerät, bei dem die Lampe 54 dem Schalter 51, die Lampe 55 dem Schalter 52 und die Lampe 56 dem Schalter 53 zugeordnet ist. Dementsprechend können durch diese drei Lampen die Mittelstellung, die linke Endstellung und die rechte Endstellung angezeigt werden.

Die Erfindung schafft die Möglichkeit, das Streubild beim Mähdreschen am Hang oder bei Windeinwirkung vom Fahrersitz aus der Getreide-Schnittbreite des Mähdreschers anzupassen. Es wird erreicht, daß wechselweise der gegenüberliegende Satz von Leitklappen mehr oder weniger verstellt wird.

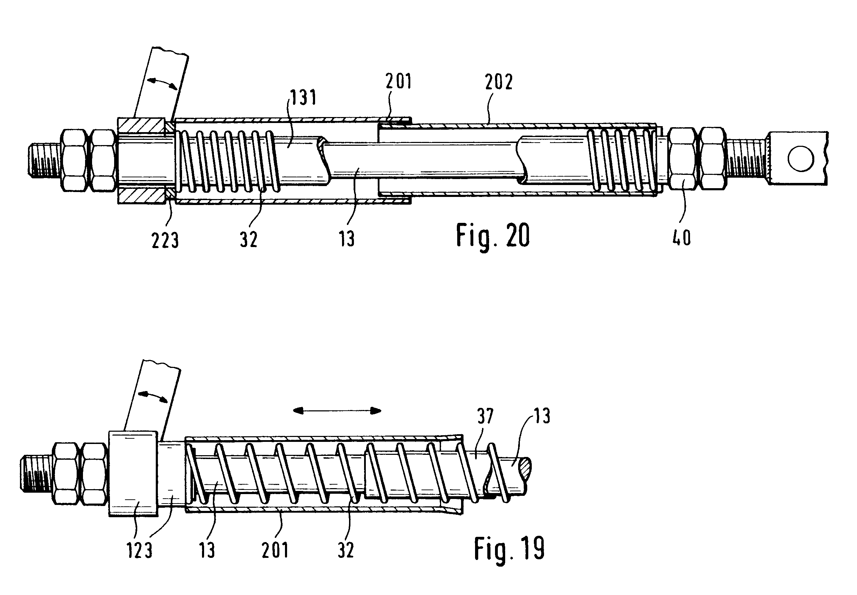

Die Figur 19 zeigt ein Kraftübertragungsstück 23, an dem eine die Koppelstange 13 übergreifende Schutzhülse 201 befestigt ist. Die Schutzhülse 201 übergreift auch die Feder 32, die ihrerseits sowohl die Koppelstange 13 als auch das Rohr 37 übergreift.

Die Figur 20 zeigt in einer der Figur 19 entsprechenden Darstellung eine weitere Schutzhülse 202, die die Schutzhülse 201 teleskopartig untergreift. Die weitere Schutzhülse 202 ist an dem Anschlag 40 befestigt, nämlich angeschweißt.

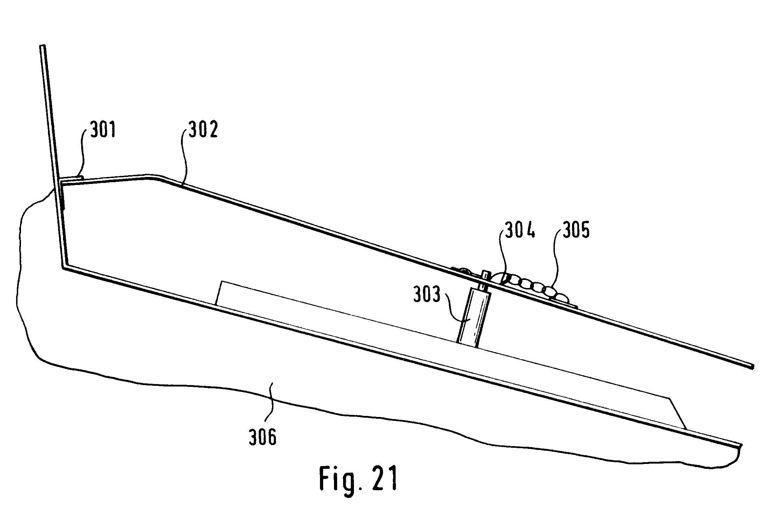

Figur 21 zeigt eine flexible Platte 302, die sich über die Breite der Verteilereinrichtung erstreckt. Sie ist an den Winkeleisen 301 befestigt, beispielsweise durch Schrauben. Weiterhin befindet sich die Platte 302 im Abstand von dem Verteilerkasten 306. Dieser Abstand wird durch Stützbolzen 303 hergestellt, an denen die Platte 302 durch Sicherungsklinken 304 befestigt ist. Die Ketten 305 dienen zum Befestigen von Splinten am oberen Ende der Stützbolzen.

## Patentansprüche

1. Verteilereinrichtung für Häcksler, vorzugsweise Anbauhäcksler (2) für Mähdrescher (1), mit einem oberen Deckblech (4), unterhalb von dem eine rechte und eine linke Gruppe von winkelig, vorzugsweise rechtwinkelig, zu diesem stehenden Leitblechen (6) nebeneinander angeordnet sind, die an ihren dem Häcksler (2) zugewandten Enden um Achsen (27) schwenkbar gelagert und im Abstand von diesen Achsen (27) mit Führungsbolzen (28), die Führungsschlitze (21) des Deckblechs (4) oder des Gehäuses durchsetzen, fest verbunden sind, und mit einer jeder der beiden Gruppen von Leitblechen (6) zugeordneten Stelleiste (17, 18),
wobei die Leitbleche (6) mit den Führungsbolzen (28) drehbar in fixierten Lagern durch die beiden Stelleisten (17, 18) miteinander verbunden sind und an ihren dem Häcksler zugewandten Enden auf dem Deckblech (4) in den Punkten (27) drehbar und verschiebbar angeordnet sind,
die Führungsschlitze (21) jeder Gruppe in Querrichtung versetzt und im wesentlichen parallel zueinander und zu der durch die Achsen (27) gezogenen Linie verlaufen,
die Stelleisten (17, 18) jeder Gruppe derart nach außen geneigt zu dieser Linie angeordnet sind, daß der Abstand der Führungsbolzen (28) zu den Achsen (27) entsprechend dem Versatz der Führungsschlitze (21) nach außen hin von Leitblech (6) zu Leitblech (6) geringer wird,
mit jeder Stelleiste (17, 18) ein Stellhebel (15, 16) gelenkig verbunden ist, die im Abstand von ihren Anlenkpunkten (20) auf der Stelleiste (17, 18) an dem Deckblech (4) jeweils in einem Punkt (19) angelenkt sind und
eine Koppelstange (13, 14) die Stellhebel (15, 16) miteinander verbindet,
**dadurch gekennzeichnet**,
daß mit den Stellhebeln (15, 16) Kraftübertragungsstücke (23) gelenkig verbunden sind, die auf der Koppelstange (13, 14) verschieblich geführt sind, wobei die Verschiebung der Kraftübertragungsstücke (23) gegenüber der Koppelstange (13, 14) durch äußere und innere Anschläge (40) begrenzt ist.

2. Verteilereinrichtung nach Anspruch 1, dadurch gekennzeichnet, daß die äußeren Anschläge verstellbar sind.

3. Verteilereinrichtung nach Anspruch 1 oder 2, dadurch gekennzeichnet, daß die inneren Anschläge verstellbar sind.

4. Verteilereinrichtung nach einem der vorhergehenden Ansprüche, dadurch gekennzeichnet, daß die inneren Anschläge durch die Enden von den die Koppelstange (13, 14) umgebenden Rohren (36, 37) gebildet werden.

5. Verteilereinrichtung nach einem der vorhergehenden Ansprüche, dadurch gekennzeichnet, daß zwischen den Verbindungsstellen von den Stellhebeln (15, 16) mit der Koppelstange (13, 14) und den inneren Anschlägen an der Koppelstange Druckfedern (32, 33) vorgesehen sind.

6. Verteilereinrichtung nach Anspruch 5, dadurch gekennzeichnet, daß die inneren Anschläge durch die auf Block gehenden Druckfedern (32, 33) gebildet werden.

7. Verteilereinrichtung nach einem der vorhergehenden Ansprüche, dadurch gekennzeichnet, daß die Koppelstange (13, 14) aus zwei Kolben-Zylinder-Einheiten (35), vorzugsweise Gasfedern, besteht.

8. Verteilereinrichtung nach einem der vorhergehenden Ansprüche, dadurch gekennzeichnet, daß die Länge der Koppelstange (13, 14) verstellbar ist.

9. Verteilereinrichtung nach einem der vorhergehenden Ansprüche, dadurch gekennzeichnet, daß die Lager (119) der Führungsbolzen (28) auf den Stelleisten (17, 18) in Langlöchern (22) verschieblich und fixierbar sind.

10. Verteilereinrichung nach einem der vorhergehenden Ansprüche, dadurch gekennzeichnet, daß die Langlöcher (22) auf den Stelleisten (17, 18) in Querrichung versetzt zueinander angeordnet sind und im wesentlichen parallel zu der durch die Achsen (27), um die die Leitbleche (6) schwenkbar sind, gezogenen Linie verlaufen.

11. Verteilereinrichtung nach einem der vorhergehenden Ansprüche, dadurch gekennzeichnet, daß zur Fixierung der Stelleiste (17, 18) in der gewünschten Stellung der Leitbleche (6) ein Führungsbolzen (28) durch eine vorzugsweise mit einem Handhebel versehene Mutter (122) in dem Führungsschlitz (21) der Deckplatte (4) festziehbar ist.

12. Verteilereinrichtung nach einem der vorhergehenden Ansprüche, dadurch gekennzeichnet, daß an den Kraftübertragungsstücken (23) jeweils eine die Koppelstange (13, 14) übergreifende Schutzhülse (201) befestigt ist.

13. Verteilereinrichtung nach Anspruch 12, dadurch gekennzeichnet, daß an den Anschlägen (40) jeweils eine die Schutzhülse (201) teleskopartig untergreifende, weitere Schutzhülse (202) befestigt ist.

14. Verteilereinrichtung nach einem der vorhergehenden Ansprüche, dadurch gekennzeichnet, daß eine vorzugsweise flexible Platte (302) über die Breite der Verteilereinrichtung (306) an dieser befestigt ist.

15. Verteilereinrichtung nach einem der vorhergehenden Ansprüche, dadurch gekennzeichnet, daß jedes der beiden seitlichen Begrenzungsbleche (5) der haubenartigen Deckplatte (4) auslaufseitig mit einer Leitklappe (7) gelenkig verbunden ist, die durch eine zweiteilige Betätigungsstange (24) gelenkig mit der Stelleiste (17, 18) für den Stellhebel (15, 16) verbunden ist, und daß die beiden Teile der Betätigungsstange (24) derart begrenzt teleskopartig zueinander verschieblich und durch eine Feder (135) in ihre ausgefahrene Stellung beaufschlagt sind, daß die Leitklappe (7) bei einer Verstellung des Stellhebels (15, 16) nach außen in ihre nach außen geschwenkte Stellung gedrückt und bei der Verstellung nach innen in dem letzten Teil des Schwenkweges des Stellhebels (15, 16) nach vollständiger Streckung der Betätigungsstange (24) nach innen hin mitgenommen wird.

16. Verteilereinrichtung nach einem der vorhergehenden Ansprüche, dadurch gekennzeichnet, daß Schalter (51, 52, 53) zur Anzeige (54, 55, 56) der linken Endstellung und/oder der rechten Endstellung und/oder der Mittelstellung der Koppelstange (13, 14) oder eines die Koppelstange (13, 14) antreibenden Schwenkhebels (9) angeordnet sind.

## Claims

1. A spreader device for straw choppers, preferably attachment straw choppers (2) for harvester-threshers (1), with an upper cover plate (4), below which there are arranged next to each other a right-hand and a left-hand group of guide plates (6) disposed at an angle, preferably at a right angle thereto, which at their ends facing the straw chopper (2) are mounted for pivoting round pins (27) and are at a distance from these pins (27) rigidly connected to guide bolts (28) that pass through guide slots (21) of the cover plate (4) or of the casing, and with an adjustment bar (17, 18) assigned to each of the two groups of guide plates (6),
**wherein** the guide plates (6) with the guide bolts (28) are interconnected by the two adjustment bars (17, 18) for rotation in fixed bearings and are at their ends facing the straw chopper arranged on the cover plate (4) at the points (27) for rotation and displacement,
the guide slots (21) of each group extend offset in the transverse direction and substantially parallel to each other and to the line drawn through the pins (27),
the adjustment bars (17, 18) of each group are arranged to slope outward relative to this line in such a way that the distance of the guide bolts (28) from the pins (27) decreases from guide plate (6) to guide plate (6), in accordance with the offset of the guide slots (21) towards the outside,
an adjustment lever (15, 16) is articulated with each adjustment bar (17, 18), which levers are articulated respectively at a point (19) on the cover plate (4) at a distance from their articulation points (20) on the adjustment bar (17, 18) and
a connecting rod (13, 14) connects the adjustment levers (15, 16) to each other,
**characterized in that**
force transmission parts (23) are articulated with the adjustment levers (15, 16), which parts are carried for displacement on the connecting rod (13, 14), the displacement of the force transmission parts (23) relative to the connecting rod (13, 14) being limited by external and internal stops (40).

2. A spreader device according to claim 1, characterized in that the external stops are adjustable.

3. A spreader device according to claim 1 or 2, characterized in that the internal stops are adjustable.

4. A spreader device according to one of the preceding claims, characterized in that the internal stops are formed by the ends of pipes (36, 37) surrounding the connecting rod (13, 14).

5. A spreader device according to one of the preceding claims, characterized in that provision is made on the connecting rod for compression springs (32, 33) between the points connecting the adjustment levers (15, 16) to the connecting rod (13, 14) and the internal stops.

6. A spreader device according to claim 5, characterized in that the internal stops are formed by the compression springs (32, 33) moving en bloc.

7. A spreader device according to one of the preceding claims, characterized in that the connecting rod (13, 14) consists of two piston-cylinder units (35), preferably pneumatic springs.

8. A spreader device according to one of the preceding claims, characterized in that the length of the connecting rod (13, 14) is adjustable.

9. A spreader device according to one of the preceding claims, characterized in that the bearings (119) of the guide bolts (28) on the adjustment bars (17, 18) can be displaced and fixed in slots (22).

10. A spreader device according to one of the preceding claims, characterized in that the slots (22) are arranged on the adjustment bars (17, 18) offset in the transverse direction with respect to each other and extend substantially parallel to the line drawn through the pins (27), round which the guide plates (6) can be pivoted.

11. A spreader device according to one of the preceding claims, characterized in that a guide bolt (28) can be tightened in the guide slot (21) of the cover plate (4) in the desired position of the guide plates (6) by a nut (122) preferably provided with a hand lever.

12. A spreader device according to one of the preceding claims, characterized in that one protective sleeve (201) each, covering the connecting rod (13, 14) is secured on the force transmission parts (23).

13. A spreader device according to claim 12, characterized in that on the stops (40) there is secured one further protective sleeve (202) each, telescopically passing under the protective sleeve (201).

14. A spreader device according to one of the preceding claims, characterized in that a preferably flexible plate (302) is fixed over the width of the spreader device (306) on the latter.

15. A spreader device according to one of the preceding claims, characterized in that at the outlet side, each of the two lateral boundary plates (5) of the hood-type cover plate (4) is articulated with a guide plate (7) which is articulated with the adjustment bar (17, 18) for the adjustment lever (15, 16) by a two-part actuator rod (24), and that the two parts of the actuator rod (24) can within limits be telescopically displaced relative to each other and are loaded by a spring (135) into their moved-out position in such a way that when the adjustment lever (15, 16) is set towards the outside, the guide plate (7) is pushed into its position swung out towards the outside and is, during an inward adjustment, taken along in the last part of the pivoting travel of the adjustment lever (15, 16) towards the inside, after the actuator rod (24) has become completely extended.

16. A spreader device according to one of the preceding claims, characterized in that switches (51, 52, 53) are arranged for the display (54, 55, 56) of the left-hand end position and/or the right-hand end position and/or the central position of the connecting rod (13, 14) or of a pivoting lever (9) driving the connecting rod (13, 14).

## Revendications

1. Dispositif répartisseur pour ensileuse, de préférence ensileuse portée (2) pour des moissonneusesbatteuses (1), comprenant une tôle de recouvrement (4) supérieure, en dessous de laquelle sont disposés les uns à côté des autres un groupe droite et un groupe gauche de tôles de guidage (6) orientées suivant un certain angle, de préférence à angle droit, à celle-ci et qui sont montées de façon à pouvoir pivoter autour d'axes (27) à leurs extrémités orientées vers l'ensileuse (2) et sont reliées solidement à une certaine distance par rapport à ces axes (27) à des boulons de guidage (28), qui traversent des fentes de guidage (21) de la tôle de recouvrement (4) ou du boîtier, et avec une barre de réglage (17,18) associée à chacun des deux groupes de tôles de guidage (6),
les tôles de guidage (6) avec les boulons de guidage (28) étant reliées les unes aux autres dans des paliers fixes par les deux barres de réglage (17,18) et sont disposées à leurs extrémités orientées vers l' ensileuse sur la tôle de recouvrement (4) dans les points (27), de façon tournante et déplaçable,
les fentes de guidage (21) de chaque groupe étant décalées dans la direction tranversale et s'étendent essentiellement parallèlement les unes aux autres et à la ligne passant à travers les axes (27),
les barres de réglage (17,18) de chaque groupe sont disposées de façon inclinée vers l'extérieur par rapport à cette ligne de telle sorte que l'écart des boulons de guidage (28) aux axes (27) diminue en fonction du décalage des fentes de guidage (21) vers l'extérieur de tôle de guidage (6) en tôle de guidage (6),
en ce qu'un levier de réglage (15,16) est articulé à chaque barre de réglage (17,18), qui sont articulées à une certaine distance de leurs points d'articulation (20) sur la barre de réglage (17,18) sur la tôle de recouvrement (4) à chaque fois en un point (19) et
qu'une tige d'accouplement (13,14) relie les leviers de réglage (15,16) entre eux,
caractérisée en ce que des pièces de transmission de force (23) sont reliées de façon articulée aux leviers de réglage (15,16) et qui sont guidées de façon déplaçable sur la tige d'accouplement (13,14), le déplacement des pièces de transmission de force (23) étant limité par rapport à la tige d'acouplement (13,14) par des butées externes et internes (40).

2. Dispositif répartisseur selon la revendication 1, caractérisé en ce que les butées externes sont déplaçables.

3. Dispositif répartisseur selon la revendication 1 ou 2, caractérisé en ce que les butées internes sont déplaçables.

4. Dispositif répartisseur selon l'une des revendications précédentes, caractérisé en ce que les butées internes sont constituées par les extrémités des tubes (36,37) entourant la tige d'accouplement (13,14).

5. Dispositif répartisseur selon l'une des revendications précédentes, caractérisé en ce qu'on prévoit entre les points de liaison des leviers de réglage (15,16) avec la tige d'accouplement (13,14) et les butées internes sur la tige d'accouplement des ressorts de pression (32,33).

6. Dispositif répartisseur selon la revendication 5, caractérisé en ce que les butées internes sont constituées par des ressorts de pression (32,33) comprimés à bloc.

7. Dispositif répartisseur selon l'une des revendications précédentes, caractérisé en ce que la tige d'accouplement (13,14) est constituée de deux unités à piston et à cylindre (35), de préférence de ressorts à gaz.

8. Dispositif répartisseur selon l'une des revendications précédentes, caractérisé en ce que la longueur de la tige d'accouplement (13,14) est réglable.

9. Dispositif répartisseur selon l'une des revendications précédentes, caractérisé en ce que les paliers (119) des boulons de guidage (28) sont déplaçables sur les barres de réglage (17,18) dans des trous oblongs (22) et peuvent y être fixés.

10. Dispositif répartisseur selon l'une des revendications précédentes, caractérisé en ce que les trous oblongs (22) sur les barres de réglage (17,18) sont disposés de façon décalée dans le sens transversal les uns par rapport aux autres et s'étendent essentiellement parallèlement à la ligne passant à travers les axes (27) autour des quels peuvent pivoter les tôles de guidage (6 ).

11. Dispositif répartisseur selon l'une des revendications précédentes, caractérisé en ce que pour la fixation de la barre de réglage (17,18) dans la position souhaitée des tôles de guidage (6), un boulon de guidage (28) peut être serré par un écrou (122) pourvu de préférence d'une poignée dans la fente de guidage (21) de la plaque de couvercle (4).

12. Dispositif répartisseur selon l'une des revendications précédentes, caractérisé en ce qu'une douille de protection (201) recouvrant la tige d'accouplement (13,14) est fixée respectivement sur les pièces de transmission de force (23).

13. Dispositif répartisseur selon la revendication 12, caractérisé en ce qu'une autre douille de protection (202) passant respectivement en dessous de la douille de protection (201) à la manière d'un télescope est fixée sur les butées (40).

14. Dispositif répartisseur selon l'une des revendications précédentes, caractérisé en ce qu'une plaque (302), de préférence flexible, est fixée sur la largeur du dispositif répartisseur (306) sur celui-ci.

15. Dispositif répartisseur selon l'une des revendications précédentes, caractérisé en ce que chacune des deux tôles de limitation latérale (5) de la plaque de couverture en forme de chape (4) est articulée côté sortie à un clapet de guidage (7) qui est relié par une tige d'actionnement en deux parties (24) de façon articulée à la barre de réglage (17,18) du levier de réglage (15,16), et en ce que les deux parties de la tige d'actionnement (24) peuvent être déplacées l'une par rapport à l'autre à la manière d'un télescope d'une telle façon limitée et sollicitées par un ressort (135) dans leur position sortie que le clapet de guidage (7), lors d'un déplacement du levier de réglage (15,16) vers l'extérieur, est poussé dans sa position pivotée vers l'extérieur, et lors du déplacement vers l'intérieur est entrainé vers l'intérieur dans la dernière partie du trajet de pivotement du levier de réglage (15,16) après un étirage complet de la tige d'actionnement (24) vers l'intérieur.

16. Dispositif répartisseur selon l'une des revendications précédentes, caractérisé en ce que des commutateurs (51,52,53) sont prévus pour l'indication (54,55,56) de la position extrême gauche et/ou de la position extrême droite et/ou de la position au centre de la tige d'accouplement (13,14) ou d'un levier de pivotement (9) entraînant la tige d'accouplemnt (13,14).
